# EUROPÄISCHE PATENTANMELDUNG

(11) **EP 2 886 281 A1**
(43) Veröffentlichungstag der Anmeldung: **24.06.2015**
(21) Anmeldenummer: 14186758.0
(22) Anmeldetag: 29.09.2014
(51) Int. Cl.: B29B 11/14, B29B 17/00

(54) **Verfahren und Vorrichtung zum Herstellen von Kunststoffpreforms**

(30) Priorität: 10.12.2013 DE 102013113780
(71) Anmelder: Krones AG, 93073 Neutraubling (DE)
(72) Erfinder: Kraus, Andreas, 93073 Neutraubling (DE)
(74) Vertreter: Grünecker Patent- und Rechtsanwälte PartG mbB

(57) **Zusammenfassung**

Verfahren zum Herstellen eines Kunststoffpreforms (130), wobei das Verfahren einen ersten Schritt einer Herstellung eines Kunststoffpreforms (110) aus Rohmaterial und einen zweiten Schritt eines Aufbringens einer Außenschicht auf den Kunststoffpreform (120) umfasst, wobei die Außenschicht eine Verbindung mit dem Kunststoffpreform eingeht und unlöslich in wässrigen Lösungen mit einem pH-Wert zwischen 3 und 10 und gut löslich in wässrigen Lösungen mit einem pH-Wert in einem Bereich kleiner als 3 und/oder größer als 10 ist.

## Beschreibung

Die vorliegende Erfindung betrifft ein Verfahren und eine entsprechende Vorrichtung zum Herstellen von Kunststoffpreforms, beispielsweise PET-Preforms.

### Stand der Technik

Aus dem Stand der Technik sind Verfahren und Vorrichtungen zum Herstellen von Kunststoffpreforms oder Preforms bekannt. Üblicherweise werden diese beispielsweise im Rahmen von Recyclingprozessen und Spritzgusstechniken aus Kunststofifflakes oder PET-Flakes hergestellt und anschließend, beispielsweise unter Anwendung von Streckblasverfahren, zu Kunststoffbehältern ausgeformt. Üblicherweise werden hierzu Spritzgussverfahren verwendet. Es ist auch bekannt, dieses Spritzgussverfahren mit unterschiedlichen Schichten über die Materialstärke des Preforms, wie beispielsweise in Multilayer-Verfahren zu realisieren. Dabei werden in dem Spritzgussprozess, bei dem der Preform erstellt wird, in jeder Schicht unterschiedliche Eigenschaften realisiert. Multilayer-Verfahren sind in der Regel jedoch mit einem hohen maschinellen Aufwand verbunden, da mehrere Spritzgusseinheiten zur Herstellung eines Preforms nötig sind.

### Aufgabe

Ausgehend vom Stand der Technik ist es Aufgabe der vorliegenden Erfindung, ein Verfahren zum Herstellen von Kunststoffpreforms zu verwirklichen, wobei das spätere Recycling der aus den Preforms hergestellten Behälter vereinfacht wird.

### Lösung

Diese Aufgabe wird erfindungsgemäß durch das Verfahren zum Herstellen eines Kunststoffpreforms nach Anspruch 1 und die Vorrichtung zum Herstellen eines Kunststoffpreforms nach Anspruch 10 gelöst. Weiterhin wird mit dem Recyclingverfahren nach Anspruch 14 ein Recyclingprozess für einen Behälter aus einem entsprechenden Kunststoffpreform verwirklicht.

Das erfindungsgemäße Verfahren zum Herstellen eines Kunststoffpreforms umfasst einen ersten Schritt einer Herstellung eines Kunststoffpreforms aus Rohmaterial und einen zweiten Schritt eines Aufbringens einer Außenschicht auf den Kunststoffpreform, wobei die Außenschicht eine Verbindung mit dem Kunststoffpreform eingeht und unlöslich in wässrigen Lösungen mit einem pH-Wert zwischen 3 und 10 und gut löslich in wässrigen Lösungen mit einem pH-Wert in einem Bereich kleiner als 3 und/oder größer als 10 ist. Bei den Kunststoffpreforms handelt es sich vorzugsweise um Kunststoffpreforms für die Behälterherstellung in der getränkeverarbeitenden Industrie, wobei der Preform ein Gewinde für einen Schraubverschluss umfassen kann. Der mit einer entsprechenden Außenschicht versehene Kunststoffpreform kann dann direkt, beispielsweise in Streckblasverfahren, zu einem Kunststoffbehälter verarbeitet werden, der dann dieselbe Außenschicht aufweist, wodurch die Lösbarkeit der auf der Außenschicht aufbringbaren Drucktinten in einem Recyclingprozess verbessert wird, da sich diese zusammen mit der Außenschicht, durch üblicherweise verwendete Recyclinglösungen mit pH-Werten größer als 10 oder kleiner als 3, gut ablöst und damit vom Kunststoffbehälter entfernt werden kann.

Gemäß einer Ausführungsform umfasst der erste Schritt die Herstellung eines Kunststoffpreforms mit einem Spritzgussverfahren. Auf diese Weise kann der Herstellungsprozess des Kunststoffpreforms, mit Ausnahme des Aufbringens der Außenschicht, in üblicher Weise vollzogen werden.

Es kann vorgesehen sein, dass die Außenschicht mittels wenigstens einem der folgenden Verfahrensschritte auf den Kunststoffpreform aufgebracht wird: Walzen, Sprühen, Tauchbeschichten, Direktdruck, Flammenbeschichtung, Plasmabeschichtung, elektrostatischem Lackieren. Die Verwendung entsprechender Vorrichtungen und Verfahren zum Aufbringen der Außenschicht können sowohl eine vollumfängliche Aufbringung einer Außenschicht als auch das Aufbringen der Außenschicht auf ausgewählten Bereichen gewährleisten.

In einer Ausführungsform des Verfahrens wird die Außenschicht entweder auf einen Teil der äußeren Oberfläche des Kunststoffpreforms oder auf die gesamte äußere Oberfläche des Kunststoffpreforms aufgebracht. Durch das Aufbringen der Außenschicht auf der gesamten Oberfläche des Kunststoffpreforms, können, unabhängig von dem anschließend aufzubringenden Druckbild, die Vorteile der Außenschicht auf der gesamten Oberfläche des Kunststoffpreforms und des anschließend hergestellten Behälters realisiert werden. Wird die Außenschicht nur auf bestimmten Bereichen aufgetragen, auf denen beispielsweise auch später das Druckbild aufgetragen wird, kann eine erheblich ökonomischere Bedruckung realisiert werden.

In einer vorteilhaften Weiterbildung ist das Verfahren dadurch gekennzeichnet, dass das Verhalten der Außenschicht gegenüber Benetzung mit Drucktinten besser ist, als das Verhalten der Oberfläche des Kunststoffpreforms gegenüber Benetzung mit Drucktinten. Auf diese Weise wird auch das erzeugte Druckbild qualitativ verbessert.

Gemäß einer weiteren Ausführungsform ist das Verfahren dadurch gekennzeichnet, dass die Außenschicht wenigstens verstreckbar und transparent ist. Wird die Druckschicht beispielsweise mit einer entsprechenden Materialdicke aufgetragen, so dass sie auch nach Verstreckung die gesamte äußere Oberfläche des Kunststoffpreforms bedeckt und ist sie gleichzeitig transparent, so bietet sie über die gesamte Oberfläche des erzeugten Kunststoffbehälters die entsprechenden Vorteile während des Recyclingprozesses, bietet aber keinen Nachteil hinsichtlich der erzeugbaren Druckbilder, da sie transparent ausgebildet ist.

In einer Ausführungsform ist vorgesehen, dass wenigstens eine physikalische Eigenschaft der Außenschicht während eines nachgeordneten Streckblasprozesses verändert wird. Auf diese Weise kann zunächst eine Außenschicht mit bestimmten physikalischen Eigenschaften aufgebracht werden, die dann anschließend beispielsweise in Abhängigkeit von der Temperatur des Streckblasprozesses oder anderer Parameter, gezielt verändert werden kann.

Vorteilhaft ist, wenn die Außenschicht eine Schmelztemperatur von wenigstens 75°C besitzt und/oder dass die Oberflächenenergie des mit der Außenschicht beschichteten Kunststoffpreforms zwischen 30mN/m und 60mN/m, bevorzugt zwischen 38mN/m und 46mN/m beträgt. Bei einer entsprechend gewählten Schmelztemperatur kann die Außenschicht während des Streckblasprozesses nochmals (leicht) verflüssigt werden, was zu einer besseren Verteilung der Außenschicht auf dem entstehenden Kunststoffbehälter führen kann. Weist die Außenschicht des Kunststoffbehälters die Oberflächenenergie gemäß dieser Ausführungsform auf, so verbessern sich die Benetzungseigenschaften mit Drucktinte erheblich, weshalb die entstehenden Druckbilder qualitativ besser sind als wenn sie auf den ursprünglichen Kunststoffbehälter ohne Außenschicht aufgebracht werden.

Vorteilhaft ist, wenn das Material der Außenschicht einen Phasenübergang in einem Temperaturbereich von 120°C-140°C durchläuft, wobei sich wenigstens eine der folgenden Eigenschaften ändert: Aggregatzustand, optische Eigenschaften, Haptik, Barriereeigenschaften, Benetzbarkeit mit Wasser oder wasserhaltigen Lösungen. Durch einen entsprechenden gezielten Phasenübergang können die Eigenschaften der Außenschicht in wohldefinierter Weise geändert werden.

Es lässt sich eine Vorrichtung zum Herstellen eines Kunststoffpreforms verwirklichen, wobei die Vorrichtung eine Transportvorrichtung zum Transport des Kunststoffpreforms, eine erste Vorrichtung zum Herstellen eines Kunststoffpreforms und eine zweite Vorrichtung zum Aufbringen einer Außenschicht auf den Kunststoffpreform umfasst, dadurch gekennzeichnet, dass die Vorrichtung zum Herstellen eines Kunststoffpreforms nach einer obigen Ausführungsform geeignet ist. Mit dieser Vorrichtung kann ein Kunststoffpreform mit entsprechenden Eigenschaften der Außenschicht gemäß obigen Ausführungsformen verwirklicht werden.

Die Vorrichtung kann in einer Ausführungsform dadurch gekennzeichnet sein, dass die zweite Vorrichtung in Transportrichtung nach der ersten Vorrichtung angeordnet ist. Durch diese Anordnung der Vorrichtung wird gewährleistet, dass die Außenschicht erst auf dem bereits fertiggestellten Kunststoffpreform aufgebracht wird.

In einer Ausführungsform der Vorrichtung umfasst die zweite Vorrichtung eine Walzvorrichtung oder eine Sprühvorrichtung oder eine Dipp-Vorrichtung oder eine Direktdruckvorrichtung oder eine Plasmabeschichtungsvorrichtung oder eine Flammenpyrolysevorrichtung oder eine Schwallvorrichtung, die geeignet sind, die Außenschicht auf den Kunststoffpreform aufzubringen. Die Verwendung dieser Vorrichtungen liefert Vorteile hinsichtlich der Erzeugung von Außenschichten, die entweder auf der gesamten Oberfläche des Kunststoffpreforms aufgebracht werden oder nur auf Teilbereichen.

Es kann vorgesehen sein, dass das Material, aus dem die Außenschicht besteht, ein laugenlösliches Polymer ist oder dieses umfasst. Die Verwendung laugenlöslicher Polymere als Außenschicht erweist sich mit Hinblick auf den Recyclingprozess eines aus dem Kunststoffpreform erzeugten Kunststoffbehälters als vorteilhaft.

Es lässt sich ein Recyclingverfahren für Kunststoffbehälter verwirklichen, insbesondere PET-Behälter, mit einer Außenschicht, die mit dem Kunststoffbehälter und einer Druckschicht verbunden ist, wobei die Außenschicht unlöslich in wässrigen Lösungen mit einem pH-Wert zwischen 3 und 10 und gut löslich in wässrigen Lösungen mit einem pH-Wert in einem Bereich größer als 10 ist, dadurch gekennzeichnet, dass der Kunststoffbehälter zerkleinert wird und eine Ablösung der Außenschicht vom zerkleinerten Kunststoffbehälter mittels nukleophiler Substitution erfolgt. In diesem Recyclingverfahren können die Vorteile der auf den Kunststoffpreform aufgebrachten Außenschicht ausgenutzt werden.

Eine Ausführungsform des Recyclingverfahrens kann umfassen, dass die Ablösung der Kunststoffschicht in einer Recyclinglösung mit einem pH-Wert größer als 10 erfolgt, wobei die Recycling-Lösung NaOH enthält. Aufgrund der Ablösbarkeit der Außenschicht in Lösungen mit pH-Werten größer als 10 löst sich die Außenschicht bei Verwendung von NaOH enthaltenden Lösungen sehr gut ab.

### Kurze Beschreibung der Figuren

- Fig. 1: Schematische Darstellung einer erfindungsgemäßen Vorrichtung zum Herstellen eines Kunststoffpreforms.
- Fig. 2: Schematische Darstellung eines erfindungsgemäßen Kunststoffpreforms.
- Fig. 3a+b: Schematische Darstellung der Veränderung der Außenschicht während eines Streckblasverfahrens.
- Fig. 4: Schematische Darstellung eines Druckverfahrens.

### Ausführliche Beschreibung

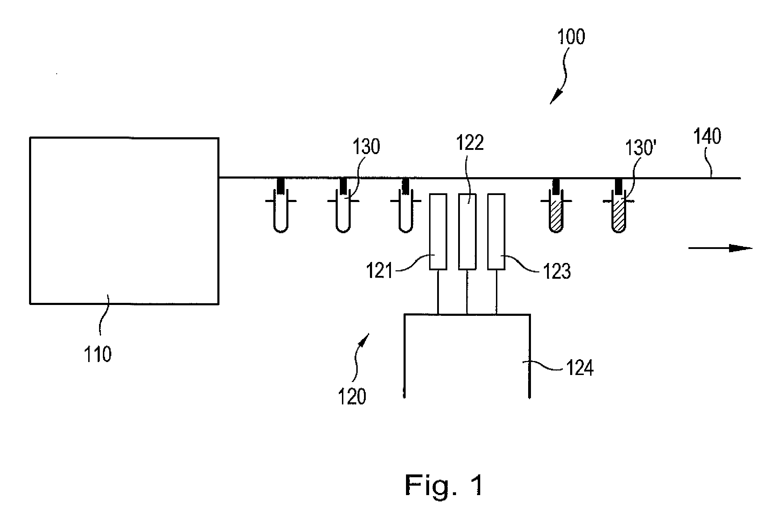

Fig. 1 zeigt eine Vorrichtung 100, mit der ein Kunststoffpreform 130 hergestellt und mit einer Außenschicht versehen werden kann. Dazu umfasst die Vorrichtung 100 eine erste Vorrichtung 110, in der beispielsweise mit Hilfe eines Spritzgussverfahrens ein Kunststoffpreform 130 hergestellt wird. Diese Herstellung kann mittels bekannter Verfahren erfolgen. So ist die Herstellung des Kunststoffpreforms 130 gegebenenfalls nicht auf Spritzgusstechniken beschränkt sondern kann auch anders erfolgen. Weiterhin können sämtliche Variationen des Spritzgussverfahrens in der Vorrichtung 110 realisiert sein. So kann beispielsweise mit Hilfe des Spritzgussverfahrens in der Vorrichtung 110 ein Multilayerpreform 130 hergestellt werden, der beispielsweise über zwei, drei oder mehr unterschiedlich dicke Schichten über die gesamte Materialstärke verfügt. Die Kunststoffpreforms 130 können dann beispielsweise im Neckhandlingverfahren zu einer zweiten Vorrichtung 120 geführt werden, in der die Preforms 130 mit der erfindungsgemäßen Außenschicht versehen werden. Dazu können ein oder mehrere Vorrichtungen 121-123 vorgesehen sein, die die Außenschicht mit Hilfe unterschiedlicher Verfahren bzw. Verfahrensschritte auf den Behälter aufbringen können. So kann es sich beispielsweise bei den Vorrichtungen 121-123 um Direktdruckmodule handeln, die die Außenschicht auf den Preform 130 aufdrucken. Dazu kann ein Tintenvorlagebehälter 124 vorgesehen sein, in dem das entsprechende Material für die Außenschicht vorgehalten wird. Es können hier auch andere Vorrichtungen zum Aufbringen der Außenschicht auf den Kunststoffpreform verwendet werden. So können beispielsweise Walz-oder Sprühvorrichtungen oder Dippvorrichtungen oder Plasmabeschichtungsvorrichtungen sowie Flammenpyrolysevorrichtungen oder Schwallvorrichtungen zum Einsatz kommen. All diese Vorrichtungen bieten unterschiedliche Vorteile. Diese Vorrichtungen können auch in geeigneten Kombinationen genutzt werden.

Grundsätzlich ist es vorteilhaft, wenn Vorrichtungen, die für das großflächige Aufbringen von Schichten auf Kunststoffpreforms geeignet sind, verwendet werden, falls die Außenschicht sich über die gesamte äußere Oberfläche (also die Oberfläche, die nicht auf der Innenseite des Kunststoffpreforms liegt) erstrecken soll, wohingegen andere Vorrichtungen, wie beispielsweise Direktdruckvorrichtungen, vorzugsweise dann zum Einsatz kommen, wenn die Außenschicht nur auf bestimmten Bereichen des Kunststoffpreform ausgebracht werden soll.

Die so mit der Außenschicht versehenen Kunststoffpreforms 130' können anschließend über einen weiterer Förderer 140, beispielsweise im Neckhandlingverfahren oder über das Einführen eines entsprechenden Dorns, zu weiteren Behälterbehandlungseinheiten transportiert werden. Insbesondere können die Preforms einer Streckblasvorrichtung zugeführt werden, in der sie auf die Größe der aus den Kunststoffpreforms herzustellenden Kunststoffbehälter gebracht werden.

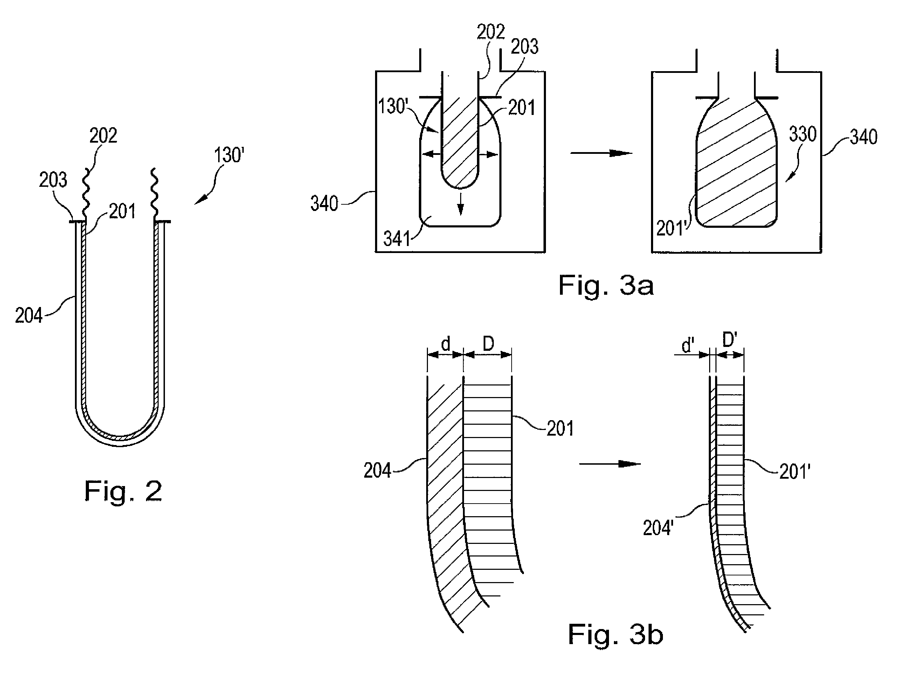

Fig. 2 zeigt einen gemäß dem in Fig. 1 beschriebenen Verfahren und der entsprechenden Vorrichtung hergestellten Kunststoffpreform 130' mit Außenschicht. Dieser umfasst, wie üblich, ein Gewinde 202, zumeist einen Tragring 203 und einen verstreckbaren Behälterbereich 201, der im folgenden als Preformkörper 201 bezeichnet wird. Das Gewinde 202 und der Tragring 203 bleiben üblicherweise während des sich anschließenden Herstellungsprozesses des gesamten Behälters (beispielsweise das Streckblasverfahren) in derselben Form und nur der Preformkörper 201 wird aufgeblasen. Da für das Bedrucken des späteren Behälters meist auch nur der aufgeblasene Preformkörper 201 verwendet wird, ist vorgesehen, dass die Außenschicht 204 auch nur auf diesen Teil des Preforms aufgetragen wird.

Die Außenschicht 204 wird gemäß den in Fig. 1 beschriebenen Verfahren auf den Preformkörper 201 aufgetragen. Es ist auch denkbar, dass die Außenschicht 204 vollumfänglich auf die gesamte Außenseite des Preformkörpers aufgetragen wird. Vorzugsweise besteht die Außenschicht 204 aus einem laugenlöslichen Polymer, das sich mit dem Preformkörper 201 fest verbindet. In jedem Fall besteht die Außenschicht aus einem Material, das zumindest nach dem Ausformen des kompletten Kunststoffbehälters in Lösungen mit einem pH-Wert zwischen 3 und 10 unlöslich und in Lösungen mit einem pH-Wert kleiner als 3 und/oder größer als 10 löslich ist. So wird gewährleistet, dass die Außenschicht des Behälters, auf der dann auch das Druckbild aufgebracht wird, sich unter normalen Umständen (also üblichem Gebrauch des Kunststoffbehälters) nicht von diesem ablöst.

Es ist weiterhin vorteilhaft, wenn das Material, aus dem die Außenschicht 204 besteht, eine Benetzung mit entsprechenden Drucktinten ermöglicht, wobei das Resultat deutlich besser ist als wenn die Drucktinte auf den Preformkörper 201 direkt aufgetragen werden würde. Dabei bedeutet deutlich besser, dass die Qualität des Druckbildes, das auf die Außenschicht aufgebracht wird, höher ist als ein vergleichbares Druckbild, das direkt auf die Behälteroberfläche aufgebracht wird. Dabei kann sich das entstehende Druckbild hinsichtlich der Schärfe, der allgemeinen Farbgebung, des Kontrasts oder anderer Eigenschaften gegenüber dem Bedrucken der Oberfläche des eigentlichen Behälters auszeichnen. Das Druckbild muss hier auch nicht hinsichtlich aller Eigenschaften verbessert werden. Grundsätzlich besteht der Vorteil des Aufbringens der Außenschicht 204 darin, dass sich diese in einem Recyclingprozess, in dem beispielsweise NaOH-Lösung zum Einsatz kommt, deutlich besser zusammen mit der Druckschicht von den Kunststoffflakes, in die die Behälter üblicherweise zerlegt werden, lösen lässt, als sich die Druckerfarbe von der Behälteroberfläche selbst lösen würde.

Die in Fig. 2 dargestellte Außenschicht 204 ist hier lückenlos auf der äußeren Oberfläche des Preformkörpers 201 dargestellt. Je nach Aufbringverfahren der Außenschicht 204 ist es jedoch auch möglich, die Außenschicht 204 auf nur bestimmte Bereiche des Preformkörpers 201 aufzubringen. Dabei ist zu berücksichtigen, dass sich die Größe und die Form der so lokalisierten Außenschichten 204 während des Herstellungsprozesses des gesamten Behälters, beispiels-weise während des Streckformens, verändern kann. Insbesondere werden die entsprechenden Bereiche mit Außenschicht 204 während des Streckblasens in die Länge gezogen und verbreitert. Da die Flächendeformation während des Streckblasens jedoch bekannt ist, da sowohl der Zielkörper als auch der Ausgangskörper bekannt sind, kann dies bereits beim Aufbringen einer nur partiellen Außenschicht 204 berücksichtigt werden.

Entsprechend zeigen Fig. 3a und 3b die Veränderungen der Außenschicht und des Preformkörpers 204 bzw. 201 während eines Streckblasverfahrens, wobei aus dem Preform 130' in Fig. 3a ein vollständig ausgebildeter Behälter 330 entsteht. Dazu wird der Preform 130' in eine Blasform eingeführt, wobei Tragring 203 und Gewinde 202 durch die Behandlung in der Blasform nicht verändert werden. Dazu können sie beispielsweise in einer Halterung außerhalb der Blasform gehalten werden, die gekühlt wird, um eine Deformation des Materials in diesem Bereich zu verhindern. Der Preformkörper 201 wird jedoch komplett in die Blasform 340 eingeführt. Die innere Oberfläche der Blasform ist dabei so ausgebildet, dass sie in Form und Größe dem herzustellenden Behälter entspricht. Durch bekannte Blasformverfahren wird dann der Preformkörper, beispielsweise durch Verstrecken oder Aufblasen bei erhöhter Temperatur, in die schließliche Form 330 gebracht, wobei der Preformkörper 201 dann an der Innenoberfläche der Blasform anliegt.

Üblicherweise werden die Preforms 130' oder zumindest der Preformkörper 201, im Rahmen des Streckblasprozesses auf eine erhöhte Temperatur gebracht. Diese Temperatur liegt zumeist in einem Bereich zwischen 120°C und 140°C. In diesem Bereich ist das Grundmaterial, das für den Preform 130' verwendet wurde, zwar fließend, aber nicht vollständig flüssig, so dass die Form des Preforms 201 verändert werden kann, ohne dass dabei Risse in der Oberfläche entstehen. Bei dieser bekannten Temperatur, die grundsätzlich beim Herstellungsprozess des Kunststoffbehälters verwendet wird, kann es vorteilhaft sein, wenn die Außenschicht 204 aus einem solchen Material besteht, dass sie bei Erreichen dieser Temperatur einen (irreversiblen) Phasenübergang bezüglich einiger Eigenschaften, wie z.B. Wechselwirkung mit Licht (Transparenz und Reflexionsvermögen sowie Streuverhalten) durchläuft. Dieser Phasenübergang kann, muss aber nicht, erster Ordnung sein. Ein Phasenübergang erster Ordnung ist jedoch bevorzugt, da sich bei Erreichen der kritischen Temperatur sprunghaft ein bestimmtes Verhalten einstellen kann.

Fig. 3b zeigt die während des Streckblasens eintretenden Veränderungen im Querschnitt der Behälterwandung bzw. des Preformkörpers 201 aus Fig. 3a. In der zum Preformkörper gehörigen Abbildung von Fig. 3b haben die Außenschicht 204 und die Wandung des Preformkörpers 201 eine Dicke d bzw. D. Grundsätzlich wird die Außenschicht 204 deutlich dünner sein als die Wandung 201 des Preformkörpers. Typische Dicken für die Außenschicht liegen im Bereich von einigen 10 bis 100 µm, die typische Dicke D des Preformkörpers 201 hingegen beträgt mehrere Millimeter, beispielsweise bis zu 3 mm. Während des Streckblasens wird die Dicke der Wandung des Preformkörpers auf die Dicke D' und die Dicke der Außenschicht 204' auf die Dicke d' reduziert. Da die Oberflächenvergrößerung, die der Preformkörper während des Streckblasens erfährt, grundsätzlich bekannt ist, kann die aufzutragende Schichtdicke d der Außenschicht 204 entsprechend gewählt werden, so dass nach dem Streckblasen die gesamte Außenschicht die gewünschte Dicke d' aufweist. Es kann beispielsweise vorgesehen sein, dass die Dicke der Außenschicht nach dem Streckblasen 5 bis 20 µm, bevorzugt 5 bis 10 µm beträgt.

Da die Verstreckung des PET-Körpers 201 während des Streckblasens sehr schnell erfolgt und es zu hohen Temperaturschwankungen kommt, ist es vorteilhaft, wenn auch das Material der Außenschicht 204' entsprechenden Belastungen standhalten kann, ohne dass dabei Materialschäden, wie beispielsweise Risse, auftreten, in die später in unerwünschter Weise, Druckertinte eindringen könnte. Entsprechend können für die Außenschicht bestimmte Polymere verwendet werden, die temperaturbeständig sind und vorzugsweise eine Schmelztemperatur von 75°C oder mehr aufweisen. Insbesondere sind Materialien bevorzugt, die in einem Temperaturbereich zwischen 80°C und 140°C, genauso wie der verwendete Kunststoff, einen Glasübergang erfahren. Da so gewährleistet werden kann, dass sich die Außenschicht 204 physikalisch ähnlich wie die Wandung des Preforms verhält, können unerwünschte Spannungen zwischen Außenschicht und ausgeformtem Kunststoffbehälter vermieden werden, wodurch die Wahrscheinlichkeit des Auftretens von unerwünschten Rissen reduziert wird.

Auch wenn bisher die Außenschicht 204 als nur auf der äußeren Oberfläche des PET-Körpers 201 aufgebracht beschrieben wurde, kann in einer Ausführungsform auch vorgesehen sein, dass auch auf der Innenseite des Preformkörpers 201 eine Schicht aufgebracht wird. Diese muss nicht notwendigerweise dieselben Eigenschaften wie die außen aufgebrachte Schicht 204 aufweisen. Sie kann beispielsweise vorgesehen sein, um eine Verbesserung des Kunststoffmaterials, aus dem der eigentliche Behälter besteht, hinsichtlich Barriereeigenschaften, wie Übertritt von Gasen, zu schaffen und kann zusätzlich genutzt werden, um bestimmte Sterilitätskriterien zu erfüllen. Um eine entsprechende Schicht auf die Innenseite des Preforms anzubringen, kann ein Druckkopf eingefahren werden oder eine entsprechende Flüssigkeit, die das Schichtmaterial umfasst, in den Preform eingeführt werden. Hier kann vorgesehen sein, dass das Material bei Kontakt mit der Innenfläche des Preforms bei einer bestimmten Temperatur polymerisiert oder eine Verbindung mit der Innenwandung des Preforms eingeht. So wird eine gleichmäßig dicke innere Oberfläche geschaffen. Hier können in vorteilhafter Weise auch Plasmabeschichtungsverfahren zum Einsatz kommen.

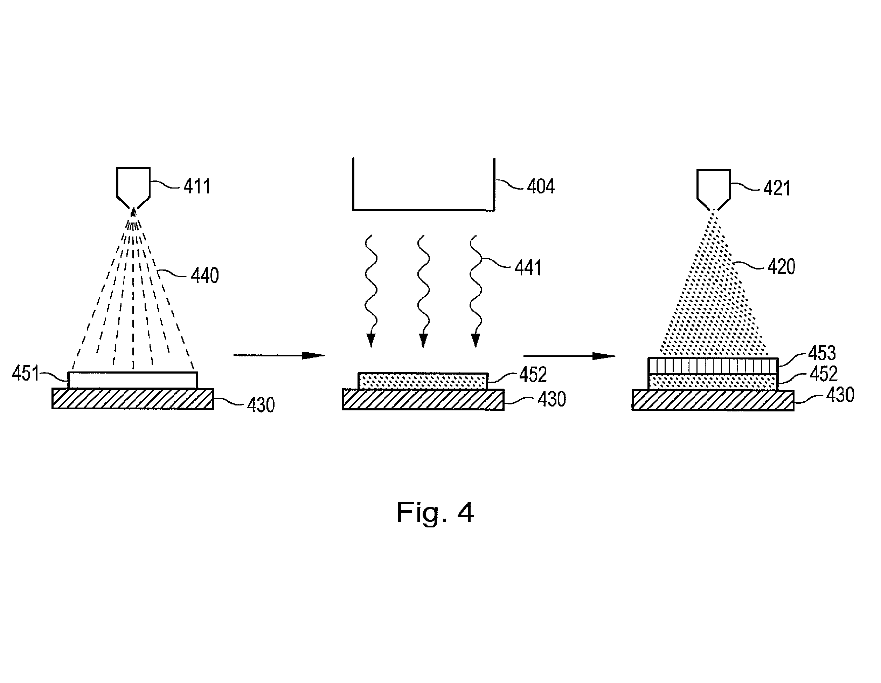

Fig. 4 zeigt schematisch die gesamte Behandlung des Preforms bis hin zum Druckbild bzw. weitere Zwischenschritte. Die in Fig. 4 gezeigten Prozessschritte müssen nicht die einzigen Prozessschritte sein, die durchgeführt werden.

Gemäß Fig. 4 wird zunächst die Außenschicht 451 auf die Außenwandung des Preforms 430 aufgebracht. Dies kann mit den vorher beschriebenen Verfahren, beispielsweise Direktdruckverfahren oder Plasmabeschichtungsverfahren, realisiert werden. Sie kann nur auf einen Teilbereich des Preforms oder auf die gesamte Außenwandung des Preforms aufgebracht werden. Anschließend wird der Preform mit der Außenschicht, beispielsweise in einem hier nicht dargestellten Streckblasverfahren, auf die Größe des eigentlichen Kunststoffbehälters gebracht. Im dritten dargestellten Verfahrensschritt kann dann das Druckbild 453, beispielsweise über entsprechende Direktdruckmodule 421, aufgebracht werden. Dazu wird die Drucktinte 420 nur auf bestimmte Bereiche oder auf die gesamte Außenwandung des Kunststoffbehälters mit Außenschicht aufgebracht.

Es kann vorgesehen sein, dass vor dem Aufbringen der Drucktinte 453 entweder während des Streckblasens oder eines weiteren Prozessschrittes die Außenschicht 451 behandelt wird, so dass sie zu einer modifizierten Außenschicht 452 umgewandelt wird. Neben den bereits beschriebenen Modifikationen der Außenschicht während des Streckblasens durch Temperatureinwirkung, kann beispielsweise auch Bestrahlung mit ultravioletten Strahlen genutzt werden, um die Eigenschaften der Außenschicht gezielt zu manipulieren. Dazu wird der Behälter mit Außenschicht 451 in eine Bestrahlungseinheit 404 geführt und mit Strahlung 441 bestrahlt. Vorteilhaft ist, wenn das Material, aus dem der Behälter besteht, für die verwendete Strahlung transparent ist. So ist es möglich, gezielt Eigenschaften der Außenschicht 451 zu verändern und sie zur modifizierten Außenschicht 452 umzubilden, während der Behälter selbst unverändert bleibt.

Grundsätzlich ist vorgesehen, dass die Eigenschaften der Außenschicht so gewählt werden, dass sie zum einen eine stabile Verbindung mit der Oberfläche des Kunststoffbehälters eingeht, die jedoch durch übliche Recyclingverfahren, wie beispielsweise Zerkleinern des Kunststoffbehälters zu Kunststoffflakes und anschließendes Waschen in einer NaOH-haltigen Lösung mit einem pH-Wert größer als 10, von dem Kunststoffbehälter abgelöst werden kann. Andererseits ist die Außenschicht 252 so ausgebildet, dass die Drucktinte eine stabile Verbindung mit der Außenschicht eingeht, wobei diese Verbindung selbst in üblichen Recyclingprozessen nicht lösbar sein muss, da das Druckbild zusammen mit der Außenschicht durch Anwendung von beispielsweise NaOH-Lösungen von der Behälteroberfläche gelöst werden kann, d.h. dass die Außenschicht beim Ablösen von der Oberfläche des Kunststoffbehälters die Druckschicht mitnimmt.

Um dies zu erreichen, kann auch vorgesehen sein, dass das Herstellungsverfahren des Kunststoffpreforms mit der Außenschicht in mehreren Stufen stattfindet. So kann die Oberfläche des Kunststoffpreforms oder Preforms genutzt werden, um als Substrat für eine erste Außenschicht zu dienen, die ihrerseits dadurch gekennzeichnet ist, dass sie eine den Recyclinganforderungen entsprechende Verbindung mit der Oberfläche des Preforms eingeht. Eine zweite Außenschicht kann nachfolgend auf diese erste Außenschicht aufgebracht werden, wobei diese Außenschicht insbesondere dadurch gekennzeichnet sein kann, dass sie durch die verwendeten Drucktinten besonders gut benetzbar ist. Ein entsprechendes Zweischichtsystem kann helfen, die gegensätzlichen Anforderungen (Ablösbarkeit von der Oberfläche des Kunststoffbehälters und gleichzeitig gute Benetzbarkeit und Haftung der Drucktinten) zu gewährleisten. Für den eigentlichen Recyclingprozess ist dann nur noch relevant, dass sich die unterste Schicht, die mit dem Kunststoffbehälter verbunden ist, von diesem während des Recyclingverfahrens ablösen lässt. Insofern ist das Verfahren nicht darauf beschränkt, dass nur eine Außenschicht oder zwei aufgetragen werden. Es kann sich hier auch um ein kompliziertes Mehrschichtsystem handeln, wobei auch vorstellbar ist, dass manche Schichten nur auf bestimmten Teilen der Oberfläche des Kunststoffpreforms bzw. den unter ihnen liegenden Außenschichten aufgebracht werden, um bestimmten Anforderungen Rechnung zu tragen. Um dies zu realisieren, müssen dann in der in Fig. 1 beschriebenen zweiten Vorrichtung, die die Außenschicht aufbringt, mehrere Vorrichtungen 121-123 vorgesehen sein, die die Außenschichten auf dem Kunststoffpreform auftragen. Auch dies kann mit unterschiedlichsten Verfahren für jede Außenschicht bewerkstelligt werden, so dass sich die Vorrichtungen 121-123 durchaus hinsichtlich verwendeter Technik zum Aufbringen der jeweiligen Außenschicht und dem verwendeten Material unterscheiden können. Ferner kann jede der Vorrichtungen 121-123 unterschiedliche Bereiche des Preforms mit einer entsprechenden Außenschicht versehen. In einem solchen Fall umfasst der Vorlagebehälter 124 vorzugsweise einen für jede der Vorrichtungen 121-123 separaten Vorlagebehälter.

## Patentansprüche

1. Verfahren zum Herstellen eines Kunststoffpreforms, wobei das Verfahren einen ersten Schritt einer Herstellung eines Kunststoffpreforms aus Rohmaterial und einen zweiten Schritt eines Aufbringens einer Außenschicht auf den Kunststoffpreform umfasst, wobei die Außenschicht eine Verbindung mit dem Kunststoffpreform eingeht und unlöslich in wässrigen Lösungen mit einem pH-Wert zwischen 3 und 10 und gut löslich in wässrigen Lösungen mit einem pH-Wert in einem Bereich kleiner als 3 und/oder größer als 10 ist.

2. Verfahren nach Anspruch 1, **dadurch gekennzeichnet, dass** der erste Schritt die Herstellung eines Kunststoffpreforms mit einem Spritzgussverfahren umfasst.

3. Verfahren nach Anspruch 1 oder 2, **dadurch gekennzeichnet, dass** die Außenschicht mittels wenigstens einem der folgenden Verfahrensschritte auf den Kunststoffpreform aufgebracht wird: Walzen, Sprühen, Tauchbeschichten, Direktdruck, Flammenbeschichtung, Plasmabeschichtung, elektrostatischem Lackieren.

4. Verfahren nach einem der Ansprüche 1 bis 3, **dadurch gekennzeichnet, dass** die Außenschicht entweder auf einen Teil der äußeren Oberfläche des Kunststoffpreforms aufgebracht wird oder auf die gesamte äußere Oberfläche des Kunststoffpreforms aufgebracht wird.

5. Verfahren nach einem der Ansprüche 1 bis 4, **dadurch gekennzeichnet, dass** das Verhalten der Außenschicht gegenüber Benetzung mit Drucktinten besser ist, als das Verhalten der Oberfläche des Kunststoffpreforms gegenüber Benetzung mit Drucktinten.

6. Verfahren nach einem der Ansprüche 1 bis 5, **dadurch gekennzeichnet, dass** die Außenschicht wenigstens verstreckbar und transparent ist.

7. Verfahren nach einem der Ansprüche 1 bis 6, **dadurch gekennzeichnet, dass** wenigstens eine physikalische Eigenschaft der Außenschicht während eines nachgeordneten Streckblasprozesses verändert wird.

8. Verfahren nach einem der Ansprüche 1 bis 7, **dadurch gekennzeichnet, dass** die Außenschicht eine Schmelztemperatur von wenigstens 75°C besitzt und/oder dass die Oberflächenenergie des mit der Außenschicht beschichteten Kunststoffpreforms zwischen 30mN/m und 60mN/m, bevorzugt zwischen 38mN/m und 46mN/m beträgt.

9. Verfahren nach einem der Ansprüche 1 bis 8, **dadurch gekennzeichnet, dass** das Material der Außenschicht einen Phasenübergang in einem Temperaturbereich von 120°C-140 °C durchläuft, wobei sich wenigstens eine der folgenden Eigenschaften ändert: Aggregatzustand, optische Eigenschaften, Haptik, Barriereeigenschaften, Benetzbarkeit mit Wasser oder wasserhaltigen Lösungen.

10. Vorrichtung zum Herstellen eines Kunststoffpreforms, wobei die Vorrichtung eine Transportvorrichtung zum Transport des Kunststoffpreforms, eine erste Vorrichtung zum Herstellen eines Kunststoffpreforms und eine zweite Vorrichtung zum Aufbringen einer Außenschicht auf den Kunststoffpreform umfasst, **dadurch gekennzeichnet, dass** die Vorrichtung zum Herstellen eines Kunststoffpreforms nach einem der Ansprüche 1 bis 9 geeignet ist.

11. Vorrichtung nach Anspruch 10, **dadurch gekennzeichnet, dass** die zweite Vorrichtung in Transportrichtung nach der ersten Vorrichtung angeordnet ist.

12. Vorrichtung nach Anspruch 10 oder 11, **dadurch gekennzeichnet, dass** die zweite Vorrichtung eine Walzvorrichtung oder eine Sprühvorrichtung oder eine Dipp-Vorrichtung oder eine Direktdruckvorrichtung oder eine Plasmabeschichtungsvorrichtung oder eine Flammenpyrolysevorrichtung oder eine Schwallvorrichtung, umfasst, die geeignet sind, die Außenschicht auf den Kunststoffpreform aufzubringen.

13. Vorrichtung nach einem der Ansprüche 10 bis 12, **dadurch gekennzeichnet, dass** das Material, aus dem die Außenschicht besteht, ein laugenlösliches Polymer ist oder dieses umfasst.

14. Recyclingverfahren für Kunststoffbehälter, insbesondere PET-Behälter, mit einer Außenschicht, die mit dem Kunststoffbehälter und einer Druckschicht verbunden ist, wobei die Außenschicht unlöslich in wässrigen Lösungen mit einem pH-Wert zwischen 3 und 10 und gut löslich in wässrigen Lösungen mit einem pH-Wert in einem Bereich größer als 10 ist, **dadurch gekennzeichnet, dass** der Kunststoffbehälter zerkleinert wird und eine Ablösung der Außenschicht vom zerkleinerten Kunststoffbehälter mittels nukleophiler Substitution erfolgt.

15. Recyclingverfahren nach Anspruch 14, **dadurch gekennzeichnet, dass** die Ablösung der Kunststoffschicht in einer Recyclinglösung mit einem pH-Wert größer als 10 erfolgt, wobei die Recycling-Lösung NaOH enthält.
